# EUROPÄISCHE PATENTSCHRIFT

(11) **EP 0 779 203 B1**
(45) Veröffentlichungstag und Bekanntmachung des Hinweises auf die Patenterteilung: **14.02.2001**
(21) Anmeldenummer: 96118276.3
(22) Anmeldetag: 14.11.1996
(51) Int. Cl.: B62D 25/24

(54) **Aus zwei Kunststoffkomponenten bestehender Verschlussdeckel**
Closure cap consisting of two plastic parts
Couvercle constitué de deux éléments en matière plastique

(30) Priorität: 11.12.1995 DE 19546160
(43) Veröffentlichungstag der Anmeldung: 18.06.1997
(73) Patentinhaber: TRW Automotive Electronics & Components GmbH & Co. KG, 78315 Radolfzell (DE)
(72) Erfinder: Bockenheimer, Alexander, 67307 Göllheim (DE)
(74) Vertreter: Eder, Thomas, Dr.-Ing.

(56) Entgegenhaltungen:
- EP-A- 0 302 702
- DE-A- 3 831 433
- DE-A- 4 327 945
- DE-B- 1 555 007
- DE-U- 8 802 422
- FR-A- 2 395 203

## Beschreibung

Die Erfindung bezieht sich auf einen aus zwei Kunststoffkomponenten bestehenden Verschlußdeckel zum dichten Abschluß einer Öffnung in einer Trägerplatte, insbesondere einer Kraftfahrzeug-Karosserie, mit einem napfartig ausgebildeten Deckelteil, bestehend aus einer Kernkomponente aus einem harten Material und einem, mit dem Deckelteil verbundenen Abdichtteil, bestehend aus einer äußeren Komponente aus einem weicheren Material, nach dem Oberbegriff des Ansprüchs 1.

Als Stand der Technik ist bereits ein Verschlußdeckel bekannt (DE 43 27 945 A1). Dieser Verschlußdeckel ist gemäß einer Ausführungsform so gestaltet, daß das Deckelteil voll inhaltlich von dem Abdichtteil umschlossen wird. Es ergibt sich damit eine Kernkomponente und eine Schalenkomponente.

Gemäß einer anderen Ausführungsform dieses bekannten Verschlußdeckels ist lediglich ein oberer, umlaufender Flanschbereich des Deckelteils von dem aus weicheren Material bestehenden Abdichtteil umfaßt.

Nächstkommender Stand der Technik ist ein Verschlüßdeckel mit napfartig ausgebildetem Deckelteil und Abdichtteil (EP-A-0 302 702).

Demgegenüber besteht die Aufgabe der vorliegenden Erfindung darin, diesen bekannten, aus zwei Kunststoffkomponenten bestehenden Verschlußdeckel so weiterzuentwickeln, daß trotz Materialersparnis eine weitere Verbesserung der Abdichtfunktion gewährleistet ist.

Diese Aufgabe wird erfindungsgemäß mit den Merkmalen im kennzeichnenden Teil des Ansprüch 1 gelöst. Hierdurch ergibt sich eine Konstruktion, bei welcher das Deckelteil in seinem oberen Bereichen freiliegt und lediglich in den Bereich von dem aus weicheren Material bestehenden Abdichtteil umfaßt ist, welcher im Bereich der Öffnung in einer Trägerplatte liegt. In diesem Bereich ist speziell eine gute Abdichtung vorzusehen, welche durch die erfindungsgemäße Konstruktion in effektiver Weise gewährleistet ist.

Der Außenrand des napfartigen Abdichtteils überragt das Deckelteil. Hierbei weist das Abdichtteil am Außenrand eine größeren Materialdicke auf als an seiner Seitenwand und am Boden. Insgesamt kann die Materialdicke des Abdichtteils geringer als die Materialdicke in den entsprechenden Bereichen des Deckelteils sein.

Weiterhin weist das Abdichtteil im Übergangsbereich zwischen der Seitenwand und dem Boden eine umlaufende Dichtlippe auf, welche vorzugsweise parallel zu einer einen Abschlußflansch des Deckelteils überdeckenden Wandung des Abdichtteils verläuft. Durch diese Abdichtlippe wird eine zusätzliche Dichtwirkung im Bereich der Öffnung eines Trägers gewährleistet.

Um die Montage beim Einsetzen in die Öffnung einer Trägerplatte zu erleichtern, kann die Seitenwand des Abdichtteils konisch zulaufend ausgebildet sein, wobei der Winkel etwa bis 8° betragen kann.

An die Wandung des Abdichtteils kann der Außenrand anschließen, welcher entgegen den o.a. Winkel konisch zulaufend ausgebildet ist.

Nach einem anderen Merkmal der Erfindung kann das Deckelteil und das Abdichtteil zu einer Längsachse rotationssymmetrisch ausgebildet sein, so daß der erfindungsgemäße Verschlußdeckel speziell in eine als Bohrung ausgebildete Öffnung eines Trägers eingesetzt werden kann.

Zur Führung und zur Verbesserung der Halterung in der Trägeröffnung kann die Seitenwand über den Umfang verteilt Eingriffselemente aufweisen. Diese Eingriffselemente können zu der jeweiligen Radialebene gerade oder schräg verlaufen und im Querschnitt dreieckförmig ausgebildet sein. Außerdem können die Eingriffselemente die Dichtlippe überragen.

Der Verschlußdeckel wird vorzugsweise im Zweikomponentenspritzverfahren hergestellt.

Die Erfindung wird nachfolgend anhand eines in der Zeichnung dargestellten Ausführungsbeispiels näher beschrieben. In der Zeichnung zeigen:
- Fig. 1: einen Schnitt gemäß der Linie I-I in Fig. 2,
- Fig. 2: eine Draufsicht auf den Verschlußdeckel gemäß Fig. 1,
- Fig. 3 und 4: perspektivische Ansichten des erfindungsgemäßen Verschlußdeckels,
- Fig. 5: eine Seitenansicht des Verschlußdeckels gemäß Fig. 2.

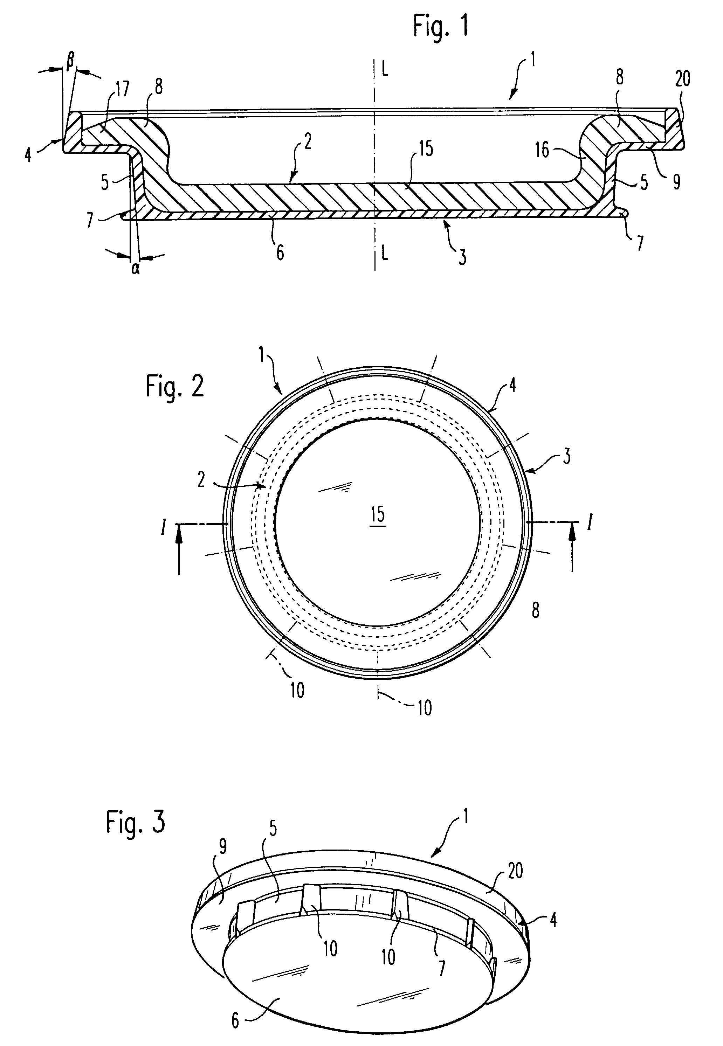

Die Fig. 1 bis 5 zeigen einen erfindungsgemäßen Verschlußdeckel 1 im Schnitt, in Draufsicht bzw. in perspektivischer Ansicht und in Seitenansicht. Wie insbesondere Fig. 1 zu entnehmen ist, besteht dieser Verschlußdeckel 1 zum dichten Abschluß einer nicht näher dargestellten Öffnung in einer Trägerplatte, insbesondere einer Kraftfahrzeug-Karosserie, aus einem napfartig ausgebildeten Deckelteil 2, welches aus einer Kernkomponente aus einem harten Material geformt ist. Dieser napfartig ausgebildete Deckelteil 2 weist einen Boden 15 auf, an welchen eine umlaufende Seitenwand 16 anschließt. Diese Seitenwand 16 geht in einen Abschlußflansch 8 über, welcher einen abgeschrägten Endbereich 17 besitzt.

Der Deckelteil 2 des Verschlußdeckels 1 ist mit einem Abdichtteil 3 verbunden, welches aus einer äußeren Komponente aus einen weicheren Material besteht.

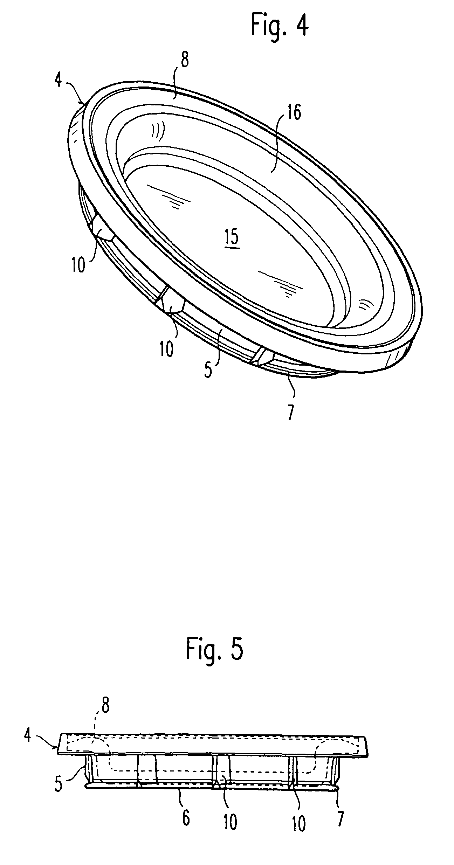

Wie insbesondere Fig. 1 und 4 zu entnehmen ist, ist das napfartig ausgebildete Deckelteil 2 in das ebenfalls napfartig ausgebildete Abdichtteil 3 eingesetzt. Aus Fig. 1 ist erkennbar, daß dieses napfartig ausgebildete Abdichtteil 3 einen Außenrand 4 aufweist, welcher mit einer nicht näher dargestellten Trägerplatte verklebbar (z.B. unter Hitze und/oder Druck) ist.

Der Außenrand 4 weist eine Außenwand 20 auf, welcher konisch zulaufend ausgebildet sein kann und einen Winkel β aufweist. Dieser Winkel β liegt zwischen 0° bis 10°.

Aus Fig. 1 ist weiterhin erkennbar, daß an die Außenwand 20 des Abdichtteils 3 eine Wandung 9 anschließt, welche den Abschlußflansch 8 des Deckelteils 2 überdeckt. An diese Wandung 9 schließt eine Seitenwand 5 des Abdichtteils 3 an. Aus Fig. 1 ist ersichtlich, daß diese Seitenwand 5 ebenfalls konisch zulaufend ausgebildet sein kann, wobei der Winkel α in einem Bereich zwischen 0° und 8° liegt.

Die Seitenwand 5 geht in einen Boden 6 über, welcher den Boden 15 des Deckelteils 2 überdeckt. Zwischen der Seitenwand 5 und dem Boden 6 des Abdichtteils 3 befindet sich eine umlaufende Dichtlippe 7, welche - wie aus Fig. 1 erkennbar - etwa parallel zu der Wandung 9 des Abdichtteils 3 verläuft.

Wie aus den Figuren erkennbar, ist der aus dem Deckelteil 2 und dem Abdichtteil 3 bestehende Verschlußdeckel 1 zur Längsachse L-L rotationssymmetrisch ausgebildet.

Aus Fig. 3 bis 5 geht hervor, daß die Seitenwand 5 des Abdichtteils 3 über den Umfang verteilte Eingriffselemente 10 aufweist. Diese Eingriffselemente 10 verlaufen gerade oder schräg zu der jeweiligen Radialebene und sind im Querschnitt dreieckförmig ausgebildet, wie insbesondere Fig. 3 zu entnehmen ist. Aus Fig. 4 geht hervor, daß die Eingriffselemente 10 die Dichtlippe 7 überragen.

Der Veschlußdeckel 1 mit seinem Deckelteil 2 und dem Abdichtteil 3 sind im Zweikomponentenspritzverfahren hergestellt, woraus ein sehr effektives Fabrikationsverfahren resultiert. Dadurch, daß das napfartig ausgebildete Deckelteil 2 in das ebenfalls napfartig ausgebildete Abdichtteil 3 eingesetzt ist, ergibt sich eine hohe Effektivität in der Abdichtung einer Öffnung in einer Trägerplatte, insbesondere einer Kraftfahrzeugkarosserie.

Es liegt insofern eine Montageerleichterung beim Einsetzen des erfindungsgemäßen Verschlußdeckels in die vorgenannte Trägeröffnung vor, als infolge des Winkels α die Seitenwand 5 auf einfache Weise in eine Trägeröffnung einsetzbar ist, wobei sich die Dichtlippe 7 zunächst umfaltet und eine gute Führung bewirkt. Unter Einwirkung von Hitze und/oder Druck läßt sich dann die gesamte Baueinheit, d.h. der Verschlußdeckel 1 über die Außenränder 4 mit der Trägerplatte verbinden.

## Patentansprüche

1. Aus zwei Kunststoffkomponenten bestehender Verschlußdeckel zum dichten Abschluß einer Öffnung in einer Trägerplatte, insbesondere einer Kraftfahrzeug-Karosserie, mit einem napfartig ausgebildeten Deckelteil (2), bestehend aus einer Kernkomponente aus einem harten Material, und einem mit dem Deckelteil (2) verbundenen Abdichtteil (3), bestehend aus einer äußeren Komponente aus einem weicheren Material, wobei beide Teile (2, 3) napfartig ausgebildet sind, und das Abdichtteil (3) im Übergangsbereich zwischen seiner Seitenwand (5) und seinem Boden (6) eine umlaufende Dichtlippe (7) aufweist,
**dadurch gekennzeichnet,**
daß das Abdichtteil (3) zumindest an dem Außenrand (4) mit der Trägerplatte zu verkleben ist, und
daß der Außenrand (4) des napfartigen Abdichtteils (3) das Deckelteil (2) überragt, und eine größere Materialdicke aufweist als die Seitenwand (5) und der Boden (6) des Abdichtteils (3).

2. Verschlußdeckel nach Anspruch 1,
**dadurch gekennzeichnet**,
daß die Materialdicke des Abdichtteils (3) am Außenrand (4), der Seitenwand (5) und dem Boden (6) geringer als die Materialdicken in den entsprechenden Bereichen des Deckelteils (2) ist.

3. Verschlußdeckel nach Anspruch 1,
**dadurch gekennzeichnet**,
daß die Seitenwand (5) des Abdichtteils (3) konisch zulaufend ausgebildet ist.

4. Verschlußdeckel nach Anspruch 2 oder 3,
**dadurch gekennzeichnet**,
daß der Konuswinkel (α) in dem Bereich von 0° bis 8° liegt.

5. Verschlußdeckel nach Anspruch 1,
**dadurch gekennzeichnet**,
daß die Dichtlippe parallel zu einer einen Abschlußflansch (8) des Deckelteils (2) überragenden Wandung (9) des Abdichtteils (3) verläuft.

6. Verschlußdeckel nach Anspruch 5 und einem oder mehreren der vorhergehenden Ansprüche,
**dadurch gekennzeichnet**,
daß an die Wandung (9) des Abdichtteils (3) der Außenrand (4) anschließt.

7. Verschlußdeckel nach Anspruch 4 und 6,
**dadurch gekennzeichnet**,
daß die Außenwand (20) des Außenrandes (4) entgegen dem Konuswinkel (α) konisch zulaufend ausgebildet ist und einen Winkel (β) aufweist.

8. Verschlußdeckel nach Anspruch 7,
**dadurch gekennzeichnet,**
daß der Winkel (β) zwischen 0° bis 10° beträgt.

9. Verschlußdeckel nach einem der vorhergehenden Ansprüche
**dadurch gekennzeichnet**,
daß das Deckelteil (2) und das Abdichtteil (3) zu einer Längsachse (L-L) rotationssymmetrisch ausgebildet ist.

10. Verschlußdeckel nach Anspruch 3,
**dadurch gekennzeichnet**,
daß die Seitenwand (5) des Abdichtteils (3) über den Umfang verteilte Eingriffselemente (10) aufweist.

11. Verschlußdeckel nach Anspruch 10,
**dadurch gekennzeichnet**,
daß die Eingriffselemente (10) zu der jeweiligen Radialebene schräg verlaufen.

12. Verschlußdeckel nach Anspruch 10 und 11,
**dadurch gekennzeichnet**,
daß die Eingriffselemente (10) im Querschnitt dreieckförmig ausgebildet sind.

13. Verschlußdeckel nach Anspruch 1 und 12,
**dadurch gekennzeichnet**,
daß die Eingriffselemente (10) die Dichtlippe (7) überragen.

14. Verschlußdeckel nach einem der vorhergehenden Ansprüche,
**gekennzeichnet durch**
Herstellung des Deckelteils (2) und des Abdichtteils (3) im Zweikomponentenspritzverfahren.

## Claims

1. Closure cap consisting of two plastic components for the sealed closing of an opening in a support panel, in particular in a motor-vehicle body, having a cap part (2) which is of cup-like design and consists of a core component made of a hard material, and having a sealing part (3) which is connected to the cap part (2) and consists of an outer component made of relatively soft material, the two parts (2, 3) being of cup-like design, and the sealing part (3) having a peripheral sealing lip (7) in the transition region between its side wall (5) and its bottom (6), characterized in that the sealing part (3) is to be bonded to the support panel, at least at the outer edge (4), and
in that the outer edge (4) of the cup-like sealing part (3) projects beyond the cap part (2) and has a greater material thickness than the side wall (5) and the bottom (6) of the sealing part (3).

2. Closure cap according to Claim 1, characterized in that the material thickness of the sealing part (3) at the outer edge (4), the side wall (5) and the bottom (6) is smaller than the material thicknesses in the corresponding regions of the cap part (2).

3. Closure cap according to Claim 1, characterized in that the side wall (5) of the sealing part (3) is of conically tapering design.

4. Closure cap according to Claim 2 or 3, characterized in that the cone angle (α) lies within the range of 0° to 8°.

5. Closure cap according to Claim 1, characterized in that the sealing lip runs parallel to a wall (9) of the sealing part (3), which wall projects beyond a closing flange (8) of the cap part (2).

6. Closure cap according to Claim 5 and one or more of the preceding claims, characterized in that the outer edge (4) adjoins the wall (9) of the sealing part (3).

7. Closure cap according to Claim 4 and 6, characterized in that the outer wall (20) of the outer edge (4) is of conically tapering design contrary to the cone angle (α) and has an angle (β).

8. Closure cap according to Claim 7, characterized in that the angle (β) is between 0° and 10°.

9. Closure cap according to one of the preceding claims, characterized in that the cap part (2) and the sealing part (3) are of rotationally symmetrical design with respect to a longitudinal axis (L-L).

10. Closure cap according to Claim 3, characterized in that the side wall (5) of the sealing part (3) has engagement elements (10) distributed over the circumference.

11. Closure cap according to Claim 10, characterized in that the engagement elements (10) run obliquely with respect to the respective radial plane.

12. Closure cap according to Claims 10 and 11, characterized in that the engagement elements (10) are of triangular design in cross section.

13. Closure cap according to Claims 1 and 12, characterized in that the engagement elements (10) project beyond the sealing lip (7).

14. Closure cap according to one of the preceding claims, characterized by production of the cap part (2) and of the sealing part (3) by two-component injection moulding.

## Revendications

1. Couvercle de fermeture constitué par deux éléments en matière plastique pour l'obturation étanche d'une ouverture dans une plaque de support, en particulier d'une carrosserie de véhicule automobile, avec une partie de couvercle (2) en forme de soucoupe, constituée par un élément de noyau réalisé à partir d'un matériau dur et d'un élément d'étanchéité (3), raccordé à la partie de couvercle (2), comportant un élément extérieur réalisé à partir d'un matériau plus doux, les deux parties (2,3) étant en forme de soucoupe et la partie d'étanchéité (3) présentant dans sa zone de transition entre sa paroi latérale (5) et son fond (6) une lèvre d'étanchéité périphérique (7), caractérisé en ce que,
la partie d'étanchéité (3) doit être collée au moins sur le bord extérieur (5) avec la plaque de support, et en ce que le bord extérieur (4) de la partie d'étanchéité en forme de soucoupe (3) surplombe la partie de couvercle (2) et présente une épaisseur de matériau plus grande que la paroi latérale (5) et le fond (6) de la partie d'étanchéité (3).

2. Couvercle de fermeture selon la revendication 1,
caractérisé en ce que,
l'épaisseur de matériau de la partie d'étanchéité (3), au niveau du bord extérieur (4) de la paroi latérale (5) et du fond (6), est inférieure aux épaisseurs de matériau dans les zones correspondantes de la partie de couvercle (2).

3. Couvercle de fermeture selon la revendication 1,
caractérisé en ce que,
la paroi latérale (5) de la partie d'étanchéité (3) est de configuration conique.

4. Couvercle de fermeture selon la revendication 2 ou 3,
caractérisé en ce que,
l'angle conique (α) se situe dans la plage de 0° à 8°C.

5. Couvercle de fermeture selon la revendication 1,
caractérisé en ce que,
la lèvre d'étanchéité s'étend parallèlement à une paroi (9) surplombant un collet d'étanchéité (8) de la partie de couvercle (2), paroi de la partie d'étanchéité (3).

6. Couvercle de fermeture selon la revendication 5, et une ou plusieurs des revendications précédentes, caractérisé en ce que,
le bord extérieur (4) est raccordé à la paroi (9) de la partie d'étanchéité (3).

7. Couvercle de fermeture selon la revendication 4 et 6,
caractérisé en ce que,
la paroi extérieure (20) du bord extérieur (4) est formée de façon à se prolonger coniquement en opposition à l'angle conique (α) et présente un angle (β).

8. Couvercle de fermeture selon la revendication 7,
caractérisé en ce que
l'angle (β) se situe entre 0° et 10° C.

9. Couvercle de fermeture selon l'une des revendications précédentes,
caractérisé en ce que,
la partie de couvercle (2) et la partie d'étanchéité (3) sont formées de façon symétrique en rotation par rapport à un axe longitudinal (L-L).

10. Couvercle de fermeture selon la revendication 3,
caractérisé en ce que,
la paroi latérale (5) de la partie d'étanchéité (3) présente des éléments de prise (10) répartis sur la périphérie.

11. Couvercle de fermeture selon la revendication 10,
caractérisé en ce que,
les éléments de prise (10) s'étendent obliquement par rapport au plan radial respectif.

12. Couvercle de fermeture selon la revendication 10 et 11,
caractérisé en ce que,
les éléments de préhension (10) sont formés triangulairement dans la section transversale.

13. Couvercle de fermeture selon la revendication 1 et 12,
caractérisé en ce que,
les éléments de préhension (10) surplombent la lèvre d'étanchéité (7).

14. Couvercle d'étanchéité selon l'une des revendications précédentes,
caractérisé par,
la fabrication de l'élément de couvercle (2) et de la partie d'étanchéité (3) dans un procédé de moulage par injection des éléments.
